# FASCICULE DE BREVET EUROPEEN

(11) **EP 2 469 771 B1**
(45) Date de publication et mention de la délivrance du brevet: **07.11.2018**
(21) Numéro de dépôt: 11306713.6
(22) Date de dépôt: 21.12.2011
(51) Int. Cl.: H04L 12/46, H04L 12/66, H04L 29/06

(54) **Procédé et dispositif de transmission de données entre deux réseaux sécurisés de type Ethernet à travers un réseau routé**
Verfahren und Vorrichtung zur Datenübertragung zwischen zwei gesicherten Netzen vom Typ Ethernet über ein Routernetz
Method and device for transmitting data between two secured Ethernet networks via a routed network

(30) Priorité: 22.12.2010 FR 1005041
(43) Date de publication de la demande: 27.06.2012
(73) Titulaire: Thales, 92200 Neuilly Sur Seine (FR)
(72) Inventeur: Ech-Chergui, Ben Youcef, 49309 Cholet (FR)
(74) Mandataire: Lavoix

(56) Documents cités:
- US-A1- 2003 028 804
- US-A1- 2008 075 073
- US-A1- 2010 228 974

## Description

La présente invention concerne un procédé de transmission de données sur un canal de communication entre au moins un réseau de départ et un réseau de destination à travers un réseau de transit d'un niveau de sécurité différent des réseaux de départ et de destination, comprenant, lors d'une transmission, du réseau de départ vers le réseau de destination au travers du réseau de transit, de données comprises dans au moins une trame d'une couche de liaison de données, la trame comprenant au moins un entête et une charge utile :
- une étape d'encapsulation de la trame dans au moins un paquet d'une couche de réseau de niveau 3 du modèle OSI, compatible avec le réseau de transit, et
- une étape de transmission du ou de chaque paquet vers le réseau de destination à travers le réseau de transit.

Elle s'applique en particulier à la transmission de données entre deux réseaux commutés sécurisés, par exemple deux réseaux Ethernet d'une entreprise, à travers un réseau routé public, par exemple le réseau Internet.

Au sein d'un réseau sécurisé commuté tel qu'un réseau de type Ethernet, les données sont échangées entre les différentes terminaux sous forme de trames de la couche 2 du modèle OSI, c'est-à-dire la couche de liaison, par exemple selon le protocole Ethernet. De telles trames ne peuvent circuler telles quelles sur un réseau public routé, par exemple sur un réseau de type IP, car elles ne comprennent aucune information de niveau 3 du modèle OSI, c'est-à-dire de la couche réseau de ce modèle.

Ce cloisonnement, s'il permet d'assurer qu'aucune donnée sensible ne sorte du réseau sécurisé et ne transite sur un réseau externe de niveau de sécurité plus faible, empêche également l'échange de données entre deux réseaux sécurisés distants, par exemple entre deux réseaux sécurisés distants d'une même entreprise, à travers un réseau de transit routé.

On connaît du document WO 2008/039468 A2 un procédé d'encapsulation de trames Ethernet dans des trames Ethernet sécurisées, de manière à sécuriser l'échange de ces trames Ethernet entre deux réseaux de type Ethernet à travers un réseau de transit également de type Ethernet.

Cependant, ce procédé ne permet pas l'échange de trames Ethernet à travers un réseau routé, car les trames Ethernet sécurisées obtenues ne comprennent aucune information de niveau 3. De plus, la protection apportée aux trames Ethernet par ce procédé ne permet pas de fournir une anonymisation des échanges entre les deux réseaux Ethernet, les identités des terminaux source et destination de ces échanges restant visibles. Ce procédé ne permet pas non plus de protéger les trames échangées contre des attaques issues du réseau de transit, notamment contre des attaques sur l'entête d'encapsulation comprenant des données de sécurité. De telles attaques peuvent entraîner une indisponibilité sur les flux empêchant ainsi deux réseaux protégés de s'échanger des données.

Pour permettre un échange sécurisé entre deux réseaux commutés sécurisés à travers un réseau routé public, il est connu de placer, sur chacun des réseaux commutés, un chiffreur, et de mettre en place entre ces deux chiffreurs une architecture spécifique, destinée à créer un sous-réseau virtuel entre ces deux chiffreurs, les deux chiffreurs communiquant comme s'ils étaient sur un même réseau Ethernet. Cependant, cette solution est très restrictive en terme d'emploi et très coûteuse. Notamment, une telle architecture permet uniquement de créer une liaison point-à-point entre au plus deux chiffreurs, et impose la création d'une infrastructure spécifique entre ces deux chiffreurs.

L'invention a donc pour but de permettre un échange sécurisé entre au moins deux réseaux commutés distants à travers un réseau routé de niveau de sécurité plus faible, dont la mise en place soit à la fois moins coûteuse et plus souple que les échanges selon l'état de la technique.

A cette fin, l'invention a pour objet un procédé de transmission du type précité, caractérisé en ce que le ou chaque paquet est un paquet sécurisé et en ce que l'étape d'encapsulation comprend les étapes suivantes :
- génération d'au moins un entête d'encapsulation de sécurité,
- formation d'au moins un paquet d'encapsulation comprenant au moins le ou un des entête(s) d'encapsulation de sécurité et ladite trame ou un fragment de ladite trame,
- formation du ou de chaque paquet sécurisé par application d'au moins une protection cryptographique au ou à chaque paquet d'encapsulation.

Le procédé de transmission selon l'invention comporte également les caractéristiques suivantes, prises séparément ou en combinaison :
- l'étape d'encapsulation comprend en outre une étape d'anonymisation du ou de chaque paquet sécurisé, comprenant un ajustement de la longueur du ou de chaque paquet sécurisé (P_{sec}) à une longueur prédéfinie,
- le procédé de transmission comprend en outre, lors d'une transmission d'au moins une trame d'une couche de liaison de données du réseau de départ vers le réseau de destination au travers du réseau de transit, avant ladite étape d'encapsulation :
   - une comparaison d'une taille de la trame à une taille maximale prédéfinie,
   - si la taille de la trame est supérieure à la taille maximale prédéfinie, une fragmentation de la trame en au moins deux fragments de trame, la taille de chaque fragment de trame étant inférieure ou égale à la taille maximale prédéfinie,
- le procédé de transmission comprend en outre la génération d'au moins un champ de fin, le ou chaque paquet d'encapsulation comprenant au moins le ou un des entête(s) d'encapsulation de sécurité, la trame ou un fragment de la trame et le ou un des champ(s) de fin,
- le ou chaque champ de fin comprend des données de bourrage, la longueur des données de bourrage étant choisie de telle sorte que la longueur du ou de chaque paquet sécurisé soit égale à ladite longueur prédéfinie,
- le procédé de transmission comprend en outre, lors d'une transmission d'au moins un paquet sécurisé du réseau de transit vers le réseau de destination, au moins une étape de réception du ou de chaque paquet sécurisé, et une étape de transmission desdites données audit réseau de destination, la ou chaque étape de réception comprenant :
   - une vérification cryptographique du paquet d'encapsulation compris dans ledit paquet sécurisé,
   - une extraction de la trame ou du fragment de trame compris dans ledit paquet d'encapsulation,
- le procédé de transmission comprend, si au moins deux paquets d'encapsulation comprennent un fragment de ladite trame, un assemblage des fragments de la trame compris dans les paquets d'encapsulation, avant l'étape de transmission desdites données audit réseau de destination,
- ladite trame est une trame Ethernet, et
- ledit paquet sécurisé comprend un paquet sécurisé selon un protocole IPsec.

L'invention a également pour objet un dispositif de transmission de données sur un canal de communication entre au moins un réseau de départ et un réseau de destination à travers un réseau de transit d'un niveau de sécurité différent des réseaux de départ et de destination, comprenant :
- des moyens d'encapsulation, aptes à encapsuler une trame d'une couche de liaison de données, comprenant au moins un entête et une charge utile, dans au moins un paquet d'une couche de réseau compatible avec le réseau de transit, et
- des moyens pour transmettre le ou chaque paquet vers le réseau de destination à travers le réseau de transit,
le dispositif étant caractérisé en ce que le ou chaque paquet est un paquet sécurisé et en ce que lesdits moyens d'encapsulation comprennent :
- des moyens pour générer au moins un entête d'encapsulation de sécurité,
- des moyens pour former au moins un paquet d'encapsulation comprenant au moins le ou un des entête(s) d'encapsulation de sécurité et ladite trame ou un fragment de ladite trame,
- des moyens pour former le ou chaque paquet sécurisé par application d'au moins une protection cryptographique au ou à chaque paquet d'encapsulation.

L'invention sera davantage comprise au regard d'exemples de réalisation de l'invention qui vont maintenant être décrits en faisant référence aux figures annexées parmi lesquelles :
- la figure 1 est un schéma illustrant l'architecture globale de réseaux adaptés à la mise en oeuvre du procédé selon l'invention ;
- la figure 2 est un schéma d'un dispositif de transmission selon un mode de réalisation de l'invention ;
- la figure 3 est un schéma synoptique illustrant des étapes du procédé selon un mode de réalisation de l'invention, mises en oeuvre par le dispositif de transmission de la figure 2 ;
- la figure 4 est un schéma illustrant la structure d'un paquet sécurisé tel qu'émis par le dispositif de transmission de la figure 2 ; et
- la figure 5 est un schéma synoptique illustrant d'autres étapes du procédé selon un mode de réalisation de l'invention, mises en oeuvre par un dispositif de transmission tel que représenté sur la figure 2.

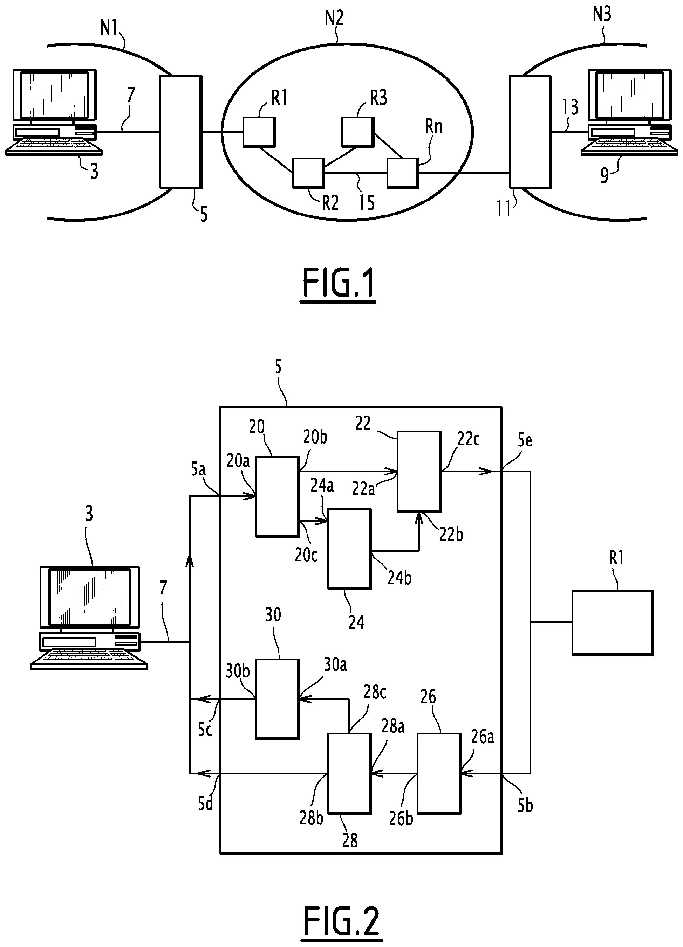

On a représenté sur la figure 1 l'architecture globale de réseaux adaptés à la mise en oeuvre du procédé selon un mode de réalisation de l'invention.

Deux réseaux de télécommunication sécurisés N1 et N3, appelés par la suite respectivement réseaux de départ et de destination, sont aptes à communiquer à travers un réseau N2 de transit, de niveau de sécurité plus faible que les réseaux sécurisés N1 et N3.

Les réseaux sécurisés N1 et N3 sont par exemple des réseaux internes d'entreprise, c'est-à-dire des réseaux locaux, comprenant chacun plusieurs équipements informatiques. Au sein de chacun de ces réseaux, ces équipements sont aptes à s'échanger des données de manière sécurisée, selon un protocole de réseau local de la couche 2 de liaison du modèle OSI, par exemple selon le protocole Ethernet.

Le réseau N2 de transit est un réseau routé de niveau de sécurité plus faible que les réseaux sécurisés N1 et N3, par exemple un réseau public tel qu'internet, sur lequel les données transitent selon un protocole de la couche réseau 3 du modèle OSI, par exemple selon le protocole IP.

On considèrera par la suite que les réseaux sécurisés N1 et N3 sont des réseaux Ethernet, et que le réseau N2 de transit est un réseau IP.

Le réseau N1 de départ comprend au moins un terminal émetteur 3 et un dispositif 5 de sécurisation, relié par une liaison 7 filaire ou sans fil au terminal émetteur 3.

Le terminal émetteur 3, par exemple un ordinateur, est apte à échanger des données avec le réseau N1 de départ, et en particulier avec le dispositif 5 de transmission, avec le réseau N2 de transit, et avec le réseau N3 de destination, par l'intermédiaire du dispositif 5 de transmission de données. Le terminal émetteur 3 comprend notamment une carte réseau, apte à échanger des données avec le réseau N1 de départ, en particulier avec le dispositif 5 de transmission, et avec le réseau N2 de transit.

Le dispositif 5 de transmission de données est en coupure entre le réseau N1 de départ et le réseau N2 de transit, de telle sorte que toutes les données échangées entre le terminal émetteur 3 et le réseau N2 de transit passent obligatoirement par le dispositif 5.

Le dispositif 5 de transmission est apte à encapsuler une trame d'une couche de liaison de données du réseau N1 de départ, comprenant au moins un entête et une charge utile, dans au moins un paquet sécurisé d'une couche de réseau compatible avec le réseau N2 de transit, et à transmettre ce ou ces paquet(s) sécurisés vers le réseau N3 de destination à travers le réseau N2 de transit.

Ce dispositif 5 de transmission sera décrit plus en détail en référence à la figure 2.

Le réseau N3 de destination comprend au moins un terminal récepteur 9 et un dispositif 11 de sécurisation, relié par une liaison 13 filaire ou sans fil au terminal récepteur 9.

Le terminal récepteur 9, par exemple un ordinateur, est apte à échanger des données avec le réseau N3 de destination, et en particulier avec le dispositif 11 de transmission, avec le réseau N2 de transit, et avec le réseau N1 de départ, par l'intermédiaire du dispositif 11 de transmission. Le terminal récepteur 9 comprend notamment une carte réseau, apte à échanger des données avec le réseau N3 de destination, en particulier avec le dispositif 11 de transmission, et avec le réseau N2 de transit.

Le dispositif 11 de transmission est installé en coupure entre le réseau N2 de transit et le réseau N3 de destination. Il est de structure et de fonctionnement identique au dispositif 5 de transmission du réseau N1 de départ.

Le réseau N2 de transit comprend notamment plusieurs routeurs R₁, R₂, R₃, Rₙ, interconnectés par un maillage de liens 13, qui sont par exemple des liens filaires ou des liens radios. Par ailleurs, au moins un routeur R₁ est relié au dispositif 5 de transmission du réseau N1 de départ, et au moins un routeur Rₙ est relié au dispositif 11 de transmission du réseau N3 de destination.

De manière connue, les routeurs R₁, R₂, R₃, Rₙ sont aptes à faire transiter des données entre les dispositifs 5, 11 de transmission des réseaux N1, N3 de départ et de destination.

La figure 2 illustre, de manière simplifiée, l'architecture d'un dispositif 5 de transmission, placé en coupure entre le terminal émetteur 3 et le routeur R₁ du réseau N2 de transit, tous deux représentés de manière schématique.

Le dispositif 5 de transmission comporte un premier module 20 d'analyse, un module 22 d'encapsulation et de protection, et un module 24 de fragmentation, ainsi qu'un module 26 de vérification cryptographique, un module 28 de désencapsulation et un module 30 de réassemblage.

Le dispositif 5 comporte une première entrée 5a reliée au terminal émetteur 3 par le lien 7, une deuxième entrée 5b reliée au routeur R₁, une première et une deuxième sorties 5c et 5d reliées au terminal émetteur 3 par le lien 7, et une troisième sortie 5e reliée au routeur R₁.

Le module 20 d'analyse comprend une entrée 20a, connectée à la première entrée 5a du dispositif 5, et une première et une deuxième sorties 20b, 20c.

Le module 24 de fragmentation comprend une entrée 24a, connectée à la deuxième sortie 20c du module 20 d'analyse, et une sortie 24b.

Le module 22 d'encapsulation et de sécurisation comprend une première entrée 22a, connectée à la première sortie 20b du module 20 d'analyse, une deuxième entrée 22b, connectée à la sortie 24b du module de fragmentation, et une sortie 22c, connectée à la troisième sortie 5e du dispositif 5.

Le module 26 de vérification cryptographique comprend une entrée 26a, connectée à la deuxième entrée 5b du dispositif 5, et une sortie 26b.

Le module 28 de désencapsulation comprend une entrée 28a, connectée à la sortie 26b du module 26 de vérification cryptographique, une première sortie 28b, connectée à la deuxième sortie 5d du dispositif 5, et une deuxième sortie 28c.

Le module 30 de réassemblage comprend une entrée 30a, connectée à la deuxième sortie 28c du module 28 de désencapsulation, et une sortie 30b, connectée à la première sortie 5c du dispositif 5.

Le module 20 d'analyse est propre à recevoir une trame d'une couche de liaison du réseau N1 émise par le terminal émetteur 3, à analyser cette trame pour déterminer si une fragmentation de cette trame est nécessaire avant sa transmission sur le réseau N2 de transit. Le module 20 d'analyse est également propre à transmettre cette trame au module 24 de fragmentation si une fragmentation est nécessaire, ou au module 22 d'encapsulation et de sécurisation dans le cas contraire.

Le module 24 de fragmentation comprend des moyens pour fragmenter une trame reçue du module 20 d'analyse en autant de portions de trame que nécessaire, et à former à partir de chacune des ces portions un fragment de trame, comprenant une des portions de trame issues de la fragmentation, et un champ indiquant la position de cette portion dans la trame d'origine et permettant d'identifier cette trame d'origine. Le module 24 de fragmentation est également apte à transmettre les fragments de trame ainsi formés au module 22 d'encapsulation et de sécurisation.

Le module 22 d'encapsulation et de sécurisation est apte à encapsuler chaque trame ou fragment de trame qu'il reçoit dans un paquet sécurisé de niveau 3. En particulier, le module 22 d'encapsulation est apte à générer au moins un entête d'encapsulation de sécurité, à former au moins un paquet d'encapsulation comprenant au moins un entête d'encapsulation de sécurité, la trame ou une fragment de la trame et un champ de fin, à appliquer au moins une protection cryptographique à chaque paquet d'encapsulation, formant ainsi au moins un paquet sécurisé.

Le module 22 d'encapsulation et de sécurisation est par ailleurs apte à transmettre le ou les paquet(s) sécurisé(s) ainsi formé(s) à travers le réseau N2 de transit, à destination du dispositif 11 de transmission.

Le module 26 de vérification cryptographique est apte à recevoir des paquets sécurisés de données ayant transité à travers le réseau N2 de transit, à analyser ces paquets pour vérifier leur authenticité et leur intégrité, et à déchiffrer les parties de ces paquets ayant éventuellement fait l'objet d'un chiffrement.

Le module 28 de désencapsulation comprend des moyens pour extraire d'un paquet sécurisé une trame ou un fragment de trame contenu dans ce paquet, par désencapsulation de ce paquet, c'est-à-dire par suppression d'un entête et d'un champ de fin préalablement ajoutés à cette trame ou à ce fragment de trame. Le module 28 de désencapsulation est par ailleurs propre à analyser les données issues de la désencapsulation, pour déterminer s'il s'agit d'une trame entière ou d'un fragment de trame, à transmettre les trames entières sur le réseau N1, vers le terminal de destination de ces trames, et les fragments de trame au module 30 de réassemblage.

Le module 30 de réassemblage comprend des moyens pour reformer, à partir d'au moins deux fragments de trame reçus du module 28 de désencapsulation, la trame à partir de laquelle ces fragments ont été générés, et pour transmettre cette trame reconstituée sur le réseau N1, vers le terminal de destination de cette trame.

Le dispositif 5 de transmission est préférablement installé dans un espace contrôlé, par exemple dans une enceinte du réseau N1, afin de protéger physiquement ses entrées et sorties contre des attaquants potentiels. Le dispositif 5 de transmission est par exemple physiquement blindé, notamment pour éviter les attaques par canaux auxiliaires, via notamment l'analyse du courant électrique consommé par ce dispositif ou le rayonnement électromagnétique émis par ce dispositif.

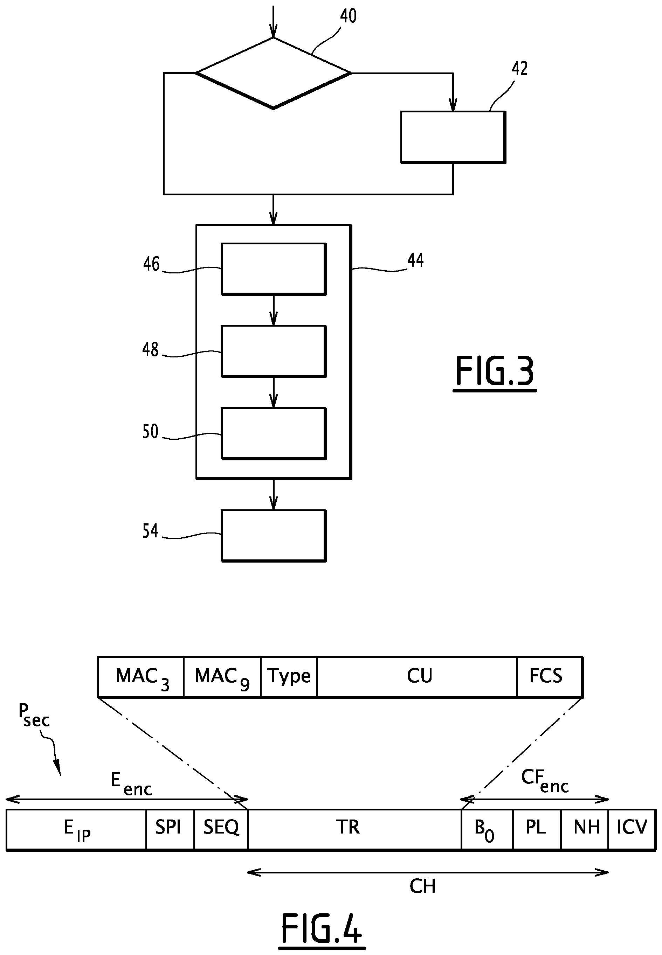

On a représenté sur la figure 3 les étapes mises en oeuvre par le dispositif 5 de transmission lorsqu'il reçoit des données émises par le terminal émetteur 3 à destination du terminal récepteur 9, ces données étant émises suivant un protocole de la couche de liaison du modèle OSI, dans le cas présent sous la forme de trames Ethernet.

Chacune de ces trames comprend un entête Ethernet, une charge utile CU et un champ de fin. L'entête comprend notamment l'adresse MAC de la source de la trame, c'est-à-dire de la carte Ethernet du terminal émetteur 3, l'adresse MAC du destinataire de la trame, c'est-à-dire de la carte Ethernet du terminal récepteur 9, et un champ « Type » indiquant le type de protocole utilisé. La charge utile, de taille comprise entre 46 et 1500 octets, correspond aux données effectivement véhiculées par la trame, et comprend donc les données ou une partie des données émises par le terminal émetteur 3 à destination du terminal récepteur 9. Le champ de fin est un champ de contrôle FCS (pour « Frame Check Sequence », c'est-à-dire séquence de contrôle de trame). Il s'agit d'un code de détection d'erreurs, permettant au récepteur de la trame de détecter certaines erreurs apparues lors de la transmission de la trame.

La charge utile d'une trame Ethernet ayant une taille maximale limitée à 1500 octets, les données émises par le terminal émetteur 3 à destination du terminal récepteur 9 sont généralement transmises sous la forme d'une pluralité de trames.

La figure 3 illustre les étapes du procédé de transmission selon l'invention mises en oeuvre par le dispositif 5 de transmission, lors de la transmission de chacune de ces trames.

De telles trames ne peuvent être transmises à travers le réseau N2 de transit, car elles ne sont pas adaptées à une transmission sur un réseau IP, ne comprenant aucune information de niveau 3 du modèle OSI. De plus, ces trames ne sont nullement protégées, de telle sorte que la transmission de ces trames telles quelles à travers le réseau N2 de transit permettrait à un attaquant placé sur ce réseau N2 de transit d'accéder à toutes les données transmises et d'attaquer le réseau N1 et/ou le réseau N3.

Chaque trame TR émise par le terminal émetteur 3 est reçue par le module 20 d'analyse du dispositif 5 de transmission. Dans une étape 40, le module 20 d'analyse analyse la trame TR pour déterminer si la taille de cette trame autorise la transmission de cette trame, après sécurisation par le procédé selon l'invention, sur le réseau N2 de transit.

On définit en effet sur tout réseau tel qu'un réseau IP ou un réseau Ethernet une taille maximale autorisée par le protocole de ce réseau, appelée PMTU, pour « Path Maximum Transmission Unit ». Dans le cas d'un réseau IP, cette taille maximale correspond au nombre maximal d'octets de l'ensemble constitué de l'en-tête IP et des données IP transmises par ce paquet. Dans le cas d'un réseau de niveau inférieur, par exemple un réseau Ethernet, cette taille maximale correspond au nombre maximal d'octets de la charge utile, par défaut 1500 s'il s'agit d'une trame Ethernet.

Comme il sera décrit par la suite, la transmission d'une trame TR depuis le réseau N1 vers le réseau N2 de transit comprend une encapsulation de cette trame dans un paquet IP sécurisé d'encapsulation. Ainsi, le paquet IP transmis par le dispositif 5 de transmission à travers le réseau N2 de transit a une taille plus importante que la trame TR d'origine, émise par le terminal émetteur 3, de telle sorte que la taille de ce paquet IP pourrait être supérieure à la valeur PMTU du réseau N2 de transit, empêchant une transmission de ce paquet IP sur ce réseau N2.

Lors de l'étape 40, le module 20 d'analyse compare la taille T_{TR} de la trame TR à la taille maximale Tₘₐₓ que cette trame pourrait avoir sans que le paquet IP obtenu par encapsulation de cette trame Ethernet dépasse la valeur PMTU du réseau N2. Cette taille maximale Tₘₐₓ est ainsi égale à la valeur PMTU du réseau N2 moins le nombre d'octets ajoutés à cette trame lors de son encapsulation dans un paquet IP.

Si la taille T_{TR} de la trame TR est supérieure à cette taille maximale Tₘₐₓ, elle est transmise par le module 20 d'analyse au module 24 de fragmentation. Si la taille T_{TR} de la trame TR est inférieure ou égale à cette taille maximale Tₘₐₓ, elle est transmise par le module 20 d'analyse au module 22 d'encapsulation et de protection.

Lors d'une étape 42, mise en oeuvre uniquement si la trame TR est transmise au module 24 de fragmentation, la trame TR est fragmentée par le module 24 de fragmentation en au moins deux portions, chacune de ces portions étant de taille inférieure ou égale à une deuxième taille maximale *T'*ₘₐₓ < *T*ₘₐₓ prédéfinie, et la trame TR d'origine pouvant être reconstituée par concaténation de ces portions.

Puis, le module 24 de fragmentation génère, à partir des N portions crées, N fragments de trame FTR, chacun de ces fragments comprenant une portion de la trame TR d'origine et un champ de fragmentation. Ce champ de fragmentation comprend un identifiant de trame, permettant d'identifier de manière unique la trame TR dont est issu la portion de trame, et un identifiant de fragment, indiquant la position de cette portion dans la trame Ethernet, par rapports aux autres portions de la trame issues de cette fragmentation. Ce champ de fragmentation a une taille T_{f}. La définition d'une deuxième taille maximale *T'*ₘₐₓ < *T*ₘₐₓ permet ainsi d'assurer que la taille de chaque fragment FTR reste inférieure à la taille maximale Tₘₐₓ, malgré l'ajout du champ de fragmentation à chaque portion de trame.

Chacun des fragments de trame FTR est ensuite transmis par le module 24 de fragmentation au module 22 d'encapsulation et de protection.

Lors d'une étape 44, le module 22 d'encapsulation et de protection génère, à partir de la trame TR reçue du module 20 d'analyse ou de chaque fragment FTR de trame reçu du module 22 de fragmentation, un paquet *P̂*_{enc} d'encapsulation sécurisé de la couche réseau du modèle OSI, par exemple selon un protocole IPsec en mode Tunnel (pour Internet Protocol Security, i.e. Sécurité du Protocole Internet), notamment selon le protocole ESP (pour Encapsulating Security Payload, ou encapsulation de charge utile sécurisée).

A cette fin, lors d'une étape 46, le module 22 d'encapsulation et de protection génère un entête E_{enc} d'encapsulation de sécurité et un premier champ de fin CF_{enc}, également appelé « trailer », et génère un paquet P_{enc} d'encapsulation, par concaténation de l'entête E_{enc}, de la trame TR ou du fragment FTR de trame à encapsuler, et du champ de fin CF_{enc}.

L'entête E_{enc} d'encapsulation de sécurité, appelé également entête de sécurité, est un entête de sécurité de niveau 3 du modèle OSI, par exemple un entête de type ESP.

L'entête E_{enc} comprend par exemple un entête IP indiquant une adresse source du paquet, c'est-à-dire l'adresse réseau du dispositif 5 de transmission sur le réseau N2, par exemple son adresse IP, ainsi qu'une adresse de destination du paquet, c'est-à-dire dire l'adresse réseau du dispositif 11 de transmission sur le réseau N2, par exemple son adresse IP.

Cet entête E_{enc} comprend en outre un identifiant permettant à un équipement homologue destinataire du paquet, dans le cas présent le dispositif 11, d'identifier la politique de sécurité appliquée au paquet sécurisé et, si tout ou partie de ce paquet fait par la suite l'objet d'un chiffrement, d'identifier la clé permettant au dispositif 11 de le déchiffrer.

Si l'entête E_{enc} est un entête de type ESP, cet identifiant est par exemple un champ SPI (pour Security Parameters Index, ou indice de paramètres de sécurité), indiquant l'association de sécurité (SA) utilisée pour la protection du paquet sécurisé P_{enc}.

L'entête E_{enc} comprend également un ou plusieurs champs de sécurité permettant au destinataire, c'est-à-dire au dispositif 11, de contrôler le rejeu des paquets qu'il reçoit, et éviter ainsi qu'un attaquant intercepte certains des paquets pour les renvoyer plus tard. Par exemple, si l'entête E_{enc} est un entête de type ESP, il comprend un champ SEQ ou « Séquence », contenant le numéro de séquence de l'association de sécurité utilisée, un tel numéro étant incrémenté entre chaque paquet sécurisé.

Le champ de fin CF_{enc} comprend notamment des données permettant de rendre anonyme le paquet transmis sur le réseau N2 de transit, en particulier d'ajuster la longueur de ce paquet à une longueur prédéfinie, de telle sorte que tous les paquets émis par le dispositif 5 sur le réseau N2 de transit aient la même longueur.

Ce champ de fin CF_{enc} comprend par exemple un champ de fin de type ESP, comprenant des données de bourrage, dont la longueur est choisie de telle sorte que la longueur du paquet sécurisé soit égale à une longueur prédéfinie, un champ « Longueur » ou « Pad length », indiquant la longueur des données de bourrage, et un champ « Next Header», c'est-à-dire « En-tête suivant », indiquant le type de données portées par le paquet d'encapsulation P_{enc}, par exemple s'il s'agit d'une trame Ethernet entière ou d'un fragment de trame.

Puis, lors d'une étape 48 de protection cryptographique en confidentialité, le module 22 d'encapsulation et de protection applique une protection cryptographique en confidentialité à une partie du paquet d'encapsulation P_{enc} comprenant la trame TR ou le fragment de trame FTR encapsulé, et éventuellement le champ de fin CF_{enc}. Cette protection cryptographique est par exemple un chiffrement, permettant de protéger en confidentialité la trame TR ou le fragment de trame FTR avant sa transmission sur le réseau N2 de transit. La partie du paquet chiffrée peut être déchiffrée par la suite au moyen de la clé identifiée dans l'entête E_{enc}.

Lors d'une étape 50 de protection cryptographique en intégrité, le module 22 d'encapsulation et de protection applique une protection cryptographique en intégrité à l'ensemble du paquet d'encapsulation P_{enc} à l'exception de l'entête IP, voire à l'ensemble du paquet d'encapsulation P_{enc}. Cette protection a pour but de protéger en intégrité le paquet d'encapsulation P_{enc}, c'est-à-dire d'éviter une modification de ce paquet par un attaquant placé sur le réseau N2 de transit. Cette protection en intégrité est par exemple une signature ou l'application d'une fonction de hachage.

Le module 22 d'encapsulation et de protection ajoute alors un champ de fin CF₂ au paquet obtenu, ce champ de fin comprenant un code d'authentification, issu de la protection cryptographique en intégrité, permettant de procéder à l'authentification du paquet et d'en vérifier l'intégrité, lors de la réception de ce paquet par le dispositif 11, après transmission de ce paquet sur le réseau N2 de transit.

Ce champ de fin CF₂ est par exemple un champ ICV (« Integrity Check Value », c'est-à-dire valeur de contrôle d'intégrité).

Ainsi, à l'issue de l'étape 50, la trame ou le fragment de trame est encapsulé dans un paquet d'encapsulation protégé, formant un paquet sécurisé P_{sec}.

Le paquet sécurisé P_{sec} est alors transmis dans une étape 54 par le dispositif 5 sur le réseau N2 de transit, à destination du dispositif 11 de transmission.

La figure 4 illustre de manière schématique la structure du paquet sécurisé P_{sec} émis sur le réseau N2 de transit, dans un mode particulier de réalisation de l'invention. Dans ce mode de réalisation, la trame TR est une trame Ethernet, le paquet sécurisé P_{sec} est un paquet IP, obtenu par encapsulation de la trame TR selon le protocole IPsec en mode tunnel ESP.

Comme précédemment décrit, le paquet sécurisé P_{sec} comprend, dans cet ordre, l'entête E_{enc} d'encapsulation de sécurité, des données chiffrées CH comprenant la trame TR et le premier champ de fin CF_{enc}, et le deuxième champ de fin CF₂.

L'entête E_{enc} comprend un entête IP E_{IP} indiquant les adresses IP source et destination, un champ SPI, indiquant l'association de sécurité (SA) utilisée, et un champ SEQ de contrôle du rejeu.

La trame TR comprend un entête indiquant l'adresse MAC de la carte réseau du terminal source 3, notée MAC₃, l'adresse MAC de la carte réseau du terminal destinataire 9, notée MAC₉, et le type de protocole utilisé, un champ utile CU comprenant les données à transmettre, et un champ de contrôle FCS.

Le premier champ de fin CF_{enc} comprend des données de bourrage Bo, un champ « Longueur » PL indiquant la taille des données de bourrage, et un champ « En-tête suivant » NH, indiquant que le paquet d'encapsulation P_{sec} comprend une trame entière.

La trame TR et le premier champ de fin CF_{enc} sont ainsi présents sous forme chiffrée dans le paquet sécurisé P_{sec}, la clé permettant le déchiffrement de ces données étant identifiée dans le champ SPI de l'entête E_{enc}. De plus, les champs SPI et SEQ de l'entête E_{enc}, la trame TR et le premier champ de fin CF_{enc} sont protégés en intégrité, le champ de fin de type ICV comprenant des données permettant de vérifier l'intégrité de ces données, lors de leur réception par le dispositif 11.

Ainsi, lors de la transmission du paquet sécurisé P_{sec} sur le réseau N2 de transit, ni les adresses MAC de la source et de la destination, ni les données portées par la trame TR ne sont accessibles en clair.

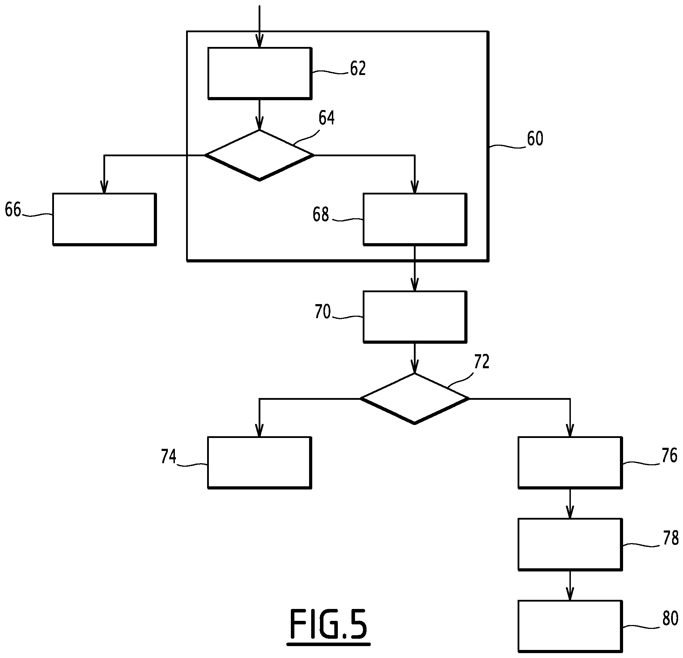

La figure 5 illustre les étapes du procédé de transmission selon l'invention mises en oeuvre par le dispositif 11 de transmission, lors de la réception d'un paquet sécurisé P_{sec} comprenant une trame TR ou un fragment de trame FTR, et émis par le dispositif 5 de transmission, après transit de ce paquet sur le réseau N2.

Dans une étape 60 de vérification cryptographique, le module 26 de vérification cryptographique du dispositif 11 analyse le paquet sécurisé P_{sec} pour vérifier son authenticité et son intégrité, et déchiffre la trame TR ou le fragment de trame FTR et le premier champ de fin CF_{enc}, si ceux-ci ont fait l'objet d'un chiffrement.

A cette fin, dans une étape 62 d'analyse, le module 26 de vérification cryptographique analyse l'entête E_{enc} du paquet P_{enc} d'encapsulation, par exemple son champ SPI s'il s'agit d'un entête ESP, et identifie la politique de sécurité appliquée au paquet sécurisé P_{sec}. Si la trame TR ou le fragment de trame FTR et le premier champ de fin CF_{enc} sont chiffrés, le module 26 de vérification cryptographique identifie à partir de cet entête E_{enc} la clé permettant de les déchiffrer. Par ailleurs, si cet entête E_{enc} comprend un champ de contrôle anti-rejeu, par exemple un numéro de séquence SEQ, le module 26 de vérification cryptographique identifie ce numéro.

Dans une étape 64, le module 26 de vérification cryptographique vérifie l'authenticité et l'intégrité du paquet sécurisé P_{sec}. Pour cela, le module 26 de vérification cryptographique compare le code d'authentification, par exemple le champ ICV, du deuxième champ de fin CF₂, au code qui serait obtenu à partir du paquet reçu, cette comparaison permettant de détecter d'éventuelles modifications apportées à ce paquet. Le module 26 de vérification cryptographique compare également le champ de contrôle anti-rejeu de l'entête E_{enc} à des champs de contrôle issus de paquets préalablement reçus par le dispositif 11. Cette comparaison permet de déterminer si le paquet P_{sec} a été émis par un adversaire, qui aurait intercepté ce paquet lors de sa transmission initiale. Ainsi, si le champ de contrôle anti-rejeu de l'entête E_{enc} est inférieur ou égal à un champ de contrôle d'un paquet préalablement reçu, le module 26 de vérification cryptographique rejette ce paquet dans une étape 66.

Puis, dans une étape 68 de déchiffrement, mise en oeuvre si la trame TR ou le fragment de trame FTR et le premier champ de fin CF_{enc} sont chiffrés, le module 26 de vérification cryptographique déchiffre ceux-ci au moyen de la clé identifiée dans l'entête E_{enc}.

A l'issue de l'étape 60 de vérification cryptographique, le paquet sécurisé déchiffré est ensuite transmis au module 28 de désencapsulation.

Dans une étape 70 de désencapsulation, le module 28 de désencapsulation extrait du paquet sécurisé déchiffré la trame TR ou le fragment de trame FTR contenu dans ce paquet, par suppression de l'entête E_{enc} d'encapsulation de sécurité et des champs de fin CF_{enc} et CF₂.

Dans une étape 72, le module 28 de désencapsulation analyse les données extraites du paquet sécurisé, pour déterminer s'il s'agit d'une trame entière ou d'un fragment de trame.

S'il s'agit d'une trame entière TR, le dispositif 11 transmet dans une étape 74 cette trame sur le réseau N3, à destination du terminal récepteur 9, et plus précisément de la carte réseau du terminal récepteur 9 dont l'adresse MAC est indiquée dans l'entête de la trame TR.

S'il s'agit d'un fragment de trame FTR, le module 28 de désencapsulation transmet dans une étape 76 ce fragment au module 30 de réassemblage.

Comme précédemment décrit, un fragment de trame FTR comprend un champ de fragmentation et une portion d'une trame TR d'origine. Dans une étape 78 de réassemblage, le module 30 de réassemblage analyse le champ de fragmentation du fragment de trame FTR, et identifie à partir de ce champ la trame TR d'origine dont est issue cette portion de trame, ainsi que la position de cette portion dans la trame d'origine. Le module 30 de réassemblage mémorise cette portion ainsi que sa position dans la trame d'origine jusqu'à ce qu'il ait reçu l'ensemble des portions de trame issues de la fragmentation de la trame d'origine. Le module 30 de réassemblage concatène alors ces portions de trame pour reconstituer cette trame d'origine.

Puis, dans une étape 80, le dispositif 11 transmet la trame TR reconstituée sur le réseau N3, à destination du terminal récepteur 9, et plus précisément de la carte réseau du terminal récepteur 9 dont l'adresse MAC est indiquée dans l'entête de la trame TR.

On comprend de la description qui précède comment le procédé et le dispositif de transmission selon l'invention permettent de transmettre de manière sécurisée des données comprises dans une trame d'une couche de liaison de données, entre deux réseaux sécurisés commutés, à travers un réseau routé non sécurisé ou de niveau de sécurité différent des réseaux sécurisés.

En particulier, l'encapsulation d'une trame d'une couche de liaison de données à transmettre à travers le réseau de transit dans un paquet sécurisé d'une couche réseau, par exemple l'encapsulation d'une trame Ethernet dans un paquet IPsec, permet d'obtenir un paquet pouvant être transmis sur tous types de réseaux, contrairement à la trame d'origine.

La sécurité des données est notamment assurée par la protection cryptographique en intégrité appliquée au paquet d'encapsulation P_{enc} et par la protection cryptographique en confidentialité appliquée de préférence à la trame ou au fragment de trame encapsulée et au premier champ de fin CF_{enc}.

En effet, la protection cryptographique en intégrité appliquée au paquet d'encapsulation P_{enc} permet de contrôler, lors de la réception du paquet sécurisé, que ce paquet n'a pas fait l'objet d'une modification lors de son transit sur le réseau N2, et d'empêcher le rejeu de ce paquet. La protection en intégrité appliquée en particulier à l'entête d'encapsulation E_{enc} permet de se prémunir contre des attaques sur le format d'encapsulation, susceptibles d'empêcher les réseaux N1 et N3 de s'échanger des données.

En outre, l'application d'une protection cryptographique en confidentialité à la trame ou au fragment de trame encapsulé(e) et au premier champ de fin CF_{enc} permet de garantir la confidentialité des données échangées et des identités des terminaux émetteur 3 et récepteur 9. En particulier, lorsque le paquet sécurisé P_{sec} comprend un fragment de trame, le chiffrement du champ de fragmentation permet d'éviter qu'un attaquant perturbe le fonctionnement du dispositif 11 de transmission en interceptant un ou plusieurs paquet(s) sécurisé(s) et en modifiant les valeurs de champ. Une telle modification aurait par exemple pour conséquence d'entraîner un stockage des fragments reçus par le dispositif 11 de transmission afin d'attendre un hypothétique dernier fragment.

De plus, puisque seules les adresses réseau des dispositifs 5 et 11 de transmission sont indiquées dans l'en-tête du paquet sécurisé, seules ces adresses peuvent être vues sur le réseau N2 de transit. Il n'est donc pas possible, à partir de ce réseau N2, de savoir quels terminaux protégés s'échangent des données.

L'anonymisation des données transmises est par ailleurs renforcée grâce à l'ajout de données de bourrage Bo dans le paquet d'encapsulation, l'ajout de telles données garantissant que l'ensemble des paquets émis sur le réseau N2 de transit sont de même longueur. Il n'est donc pas possible à un adversaire placé sur le réseau N2 de déterminer quel est le type des données échangées entre les réseaux N1 et N3 par simple analyse de la longueur des paquets échangés.

En outre, la mise en oeuvre d'un tel procédé est moins coûteuse que celle des procédé selon l'état de la technique, puisqu'elle permet d'exploiter des protocoles existants tels qu'un protocole IPsec.

Il devra toutefois être compris que les exemples de réalisation présentés ci-dessus ne sont pas limitatifs.

Notamment, selon d'autres modes de réalisation, le procédé de transmission est mis en oeuvre dans un mode point à multi-point entre plus de deux réseaux sécurisés, à travers plusieurs réseaux de niveaux de sécurité plus faibles, chacun des réseaux sécurisés étant équipé d'au moins un dispositif de transmission selon l'invention.

## Revendications

1. Procédé de transmission de données sur un canal de communication entre au moins un réseau (N1) de départ et un réseau (N3) de destination à travers un réseau (N2) de transit d'un niveau de sécurité différent des réseaux de départ (N1) et de destination (N3), comprenant, lors d'une transmission, du réseau (N1) de départ vers le réseau (N3) de destination au travers du réseau (N2) de transit, de données comprises dans au moins une trame (TR) d'une couche de liaison de données, la trame (TR) comprenant au moins un entête et une charge utile (CU) :
- une étape (44) d'encapsulation de la trame (TR) dans au moins un paquet (P_{sec}) d'une couche de réseau de niveau 3 du modèle OSI, compatible avec le réseau (N2) de transit, et
- une étape (54) de transmission du ou de chaque paquet (P_{sec}) vers le réseau (N3) de destination à travers le réseau (N2) de transit,
le procédé étant **caractérisé en ce que** le ou chaque paquet (P_{sec}) est un paquet sécurisé et **en ce que** l'étape (44) d'encapsulation comprend les étapes suivantes :
- génération (46) d'au moins un entête (E_{enc}) d'encapsulation de sécurité,
- formation d'au moins un paquet (P_{enc}) d'encapsulation comprenant au moins le ou un des entête(s) (E_{enc}) d'encapsulation de sécurité et ladite trame (TR) ou un fragment (FTR) de ladite trame,
- formation du ou de chaque paquet sécurisé (P_{sec}) par application (48, 50) d'au moins une protection cryptographique au ou à chaque paquet (P_{enc}) d'encapsulation.

2. Procédé de transmission selon la revendication 1, **caractérisé en ce que** l'étape (44) d'encapsulation comprend en outre une étape d'anonymisation du ou de chaque paquet sécurisé (P_{sec}), comprenant un ajustement de la longueur du ou de chaque paquet sécurisé (P_{sec}) à une longueur prédéfinie.

3. Procédé de transmission selon l'une des revendications 1 ou 2, **caractérisé en ce qu'**il comprend en outre, lors d'une transmission d'au moins une trame (TR) d'une couche de liaison de données du réseau (N1) de départ vers le réseau (N3) de destination au travers du réseau (N2) de transit, avant ladite étape (44) d'encapsulation :
- une comparaison (40) d'une taille (T_{TR}) de ladite trame (TR) à une taille maximale prédéfinie (Tₘₐₓ),
- si la taille (T_{TR}) de ladite trame (TR) est supérieure à ladite taille maximale prédéfinie (Tₘₐₓ), une fragmentation (42) de ladite trame (TR) en au moins deux fragments (FTR) de trame, la taille de chaque fragment (FTR) de trame étant inférieure ou égale à ladite taille maximale prédéfinie (Tₘₐₓ).

4. Procédé de transmission selon l'une quelconque des revendications précédentes, **caractérisé en ce qu'**il comprend en outre la génération (46) d'au moins un champ de fin (CF_{enc}), le ou chaque paquet (P_{enc}) d'encapsulation comprenant au moins ledit ou un desdits entête(s) (E_{enc}) d'encapsulation de sécurité, ladite trame (TR) ou un fragment (FTR) de ladite trame et le ou un desdits champ(s) de fin (CF_{enc}).

5. Procédé de transmission selon la revendication 4 prise en combinaison avec la revendication 2, **caractérisé en ce que** le ou chaque champ de fin (CF_{enc}) comprend des données (Bo) de bourrage, la longueur desdites données (Bo) de bourrage étant choisie de telle sorte que la longueur du ou de chaque paquet sécurisé (P_{sec}) soit égale à ladite longueur prédéfinie.

6. Procédé de transmission selon l'une quelconque des revendications précédentes, **caractérisé en ce qu'**il comprend entre outre, lors d'une transmission d'au moins un paquet sécurisé (P_{sec}) dudit réseau (N2) de transit vers ledit réseau (N3) de destination, au moins une étape de réception du ou de chaque paquet sécurisé (P_{sec}), et une étape (74, 80) de transmission desdites données audit réseau (N3) de destination, la ou chaque étape de réception comprenant :
- une vérification (62, 64, 68) cryptographique du paquet (P_{enc}) d'encapsulation compris dans ledit paquet (P_{sec}) sécurisé,
- une extraction (70) de la trame (TR) ou du fragment (FTR) de trame compris dans ledit paquet (P_{enc}) d'encapsulation.

7. Procédé de transmission selon la revendication 6 prise en combinaison avec la revendication 3, **caractérisé en ce qu'**il comprend, si au moins deux paquets (P_{enc}) d'encapsulation comprennent un fragment (FTR) de ladite trame, un assemblage (78) des fragments (FTR) de la trame compris dans les paquets (P_{enc}) d'encapsulation, avant l'étape (74, 80) de transmission desdites données audit réseau (N3) de destination.

8. Procédé de transmission selon l'une quelconque des revendications précédentes, **caractérisé en ce que** ladite trame (TR) est une trame Ethernet.

9. Procédé de transmission selon l'une quelconque des revendications précédentes, **caractérisé en ce que** ledit paquet sécurisé (P_{sec}) comprend un paquet sécurisé selon un protocole IPsec.

10. Dispositif (5, 11) de transmission de données sur un canal de communication entre au moins un réseau (N1) de départ et un réseau (N3) de destination à travers un réseau (N2) de transit d'un niveau de sécurité plus faible que les réseaux de départ (N1) et de destination (N3), comprenant :
- des moyens (22) d'encapsulation, aptes à encapsuler une trame (TR) d'une couche de liaison de données, comprenant au moins un entête et une charge utile, dans au moins un paquet (P_{sec}) d'une couche de réseau compatible avec le réseau (N2) de transit, et
- des moyens pour transmettre le ou chaque paquet (P_{sec}) vers le réseau (N3) de destination à travers le réseau de transit,
le dispositif étant **caractérisé en ce que** le ou chaque paquet (P_{sec}) est un paquet sécurisé et **en ce que** lesdits moyens (22) d'encapsulation comprennent :
- des moyens pour générer au moins un entête (E_{enc}) d'encapsulation de sécurité,
- des moyens pour former au moins un paquet (P_{enc}) d'encapsulation comprenant au moins le ou un des entête(s) (E_{enc}) d'encapsulation de sécurité et ladite trame (TR) ou un fragment (FTR) de ladite trame,
- des moyens pour former le ou chaque paquet sécurisé (P_{sec}) par application d'au moins une protection cryptographique au ou à chaque paquet (P_{enc}) d'encapsulation.

## Patentansprüche

1. Verfahren zum Übertragen von Daten über einen Kanal zur Kommunikation zwischen mindestens einem Startnetzwerk (N1) und einem Zielnetzwerk (N3) über ein Transitnetzwerk (N2) von einem Sicherheitsniveau, das von dem Start- (N1) und Zielnetzwerk (N3) verschieden ist, welches bei einer Übertragung, von dem Startnetzwerk (N1) aus über das Transitnetzwerk (N2) zum Zielnetzwerk (N3), von Daten, welche in mindestens einem Rahmen (TR) einer Datenverbindungsschicht enthalten sind, wobei der Rahmen (TR) mindestens einen Kopf und eine Nutzinformation (CU) aufweist, aufweist:
- einen Schritt (44) der Kapselung des Rahmens (TR) in mindestens einem Paket (P_{sec}) einer Netzwerkschicht der Ebene 3 des OSI-Modells, welche mit dem Transitnetzwerk (N2) kompatibel ist, und
- einen Schritt (54) der Übertragung des oder jedes Pakets (P_{sec}) an das Zielnetzwerk (N3) über das Transitnetzwerk (N2),
wobei das Verfahren **dadurch gekennzeichnet ist, dass** das oder jedes Paket (P_{sec}) ein gesichertes Paket ist und dass der Schritt (44) der Kapselung die folgenden Schritte aufweist:
- Erzeugung (46) von mindestens einem Kopf (E_{enc}) zur Sicherheitskapselung,
- Bilden mindestens eines Pakets (P_{enc}) zur Kapselung, welches mindestens den Kopf oder einen von den Köpfen (E_{enc}) zur Sicherheitskapselung und den Rahmen (TR) oder ein Fragment (FTR) des Rahmens aufweist,
- Bilden des oder jedes gesicherten Pakets (P_{sec}) durch Anwendung (48, 50) von mindestens einem kryptographischen Schutz auf das oder auf jedes Paket (P_{enc}) zur Kapselung.

2. Verfahren zur Übertragung gemäß dem Anspruch 1, **gekennzeichnet dadurch, dass** der Schritt (44) der Kapselung ferner aufweist einen Schritt der Anonymisierung des oder jedes gesicherten Pakets (P_{sec}), aufweisend eine Anpassung der Länge des oder jedes gesicherten Pakets (P_{sec}) an eine vordefinierte Länge.

3. Verfahren zur Übertragung gemäß einem der Ansprüche 1 oder 2, **gekennzeichnet dadurch, dass** es bei einer Übertragung des mindestens einen Rahmens (TR) einer Datenverbindungsschicht des Startnetzwerks (N1) an das Zielnetzwerk (N3) über das Transitnetzwerk (N2) ferner vor dem Schritt (44) der Kapselung aufweist:
- einen Vergleich (40) einer Größe (T_{TR}) des Rahmens (TR) mit einer vordefinierten Maximalgröße (Tₘₐₓ),
- falls die Größe (T_{TR}) des Rahmens (TR) größer ist als die vordefinierte Maximalgröße (Tₘₐₓ), eine Fragmentierung (42) des Rahmens in mindestens zwei Rahmen-Fragmente (FTR), wobei die Größe jedes Rahmen-Fragments (FTR) kleiner oder gleich der vordefinierten Maximalgröße (Tₘₐₓ) ist.

4. Verfahren zur Übertragung gemäß irgendeinem der vorhergehenden Ansprüche, **gekennzeichnet dadurch, dass** es ferner aufweist die Erzeugung (46) von mindestens einem Endfeld (CF_{enc}), wobei das oder jedes Paket (P_{enc}) zur Kapselung aufweist mindestens den Kopf oder einen von den Köpfen (E_{enc}) zur Sicherheitskapselung, den Rahmen (TR) oder ein Fragment (FTR) des Rahmens und das Endfeld oder eines von den Endfeldern (CF_{enc}).

5. Verfahren zur Übertragung gemäß dem Anspruch 4 in Verbindung mit dem Anspruch 2, **gekennzeichnet dadurch, dass** das oder jedes Endfeld (CF_{enc}) Fülldaten (Bo) aufweist, wobei die Länge der Fülldaten (Bo) derart ausgewählt ist, dass die Länge des oder jedes gesicherten Pakets (P_{sec}) gleich der vordefinierten Länge ist.

6. Verfahren zur Übertragung gemäß irgendeinem der vorhergehenden Ansprüche, **gekennzeichnet dadurch, dass** es bei einer Übertragung von mindestens einem gesicherten Paket (P_{sec}) des Transitnetzwerks (N2) an das Zielnetzwerk (N3) ferner mindestens einen Schritt des Empfangs des oder jedes gesicherten Pakets (P_{sec}) und einen Schritt (74, 80) der Übertragung der Daten an das Zielnetzwerk (N3) aufweist, wobei der oder jeder Schritt des Empfangs aufweist:
- eine kryptographische Verifizierung (62, 64, 68) des Pakets (P_{enc}) zur Kapselung, welches in dem gesicherten Paket (P_{sec}) enthalten ist,
- eine Extraktion (70) des Rahmens (TR) oder des Rahmen-Fragments (FTR), welches in dem Paket (P_{enc}) zur Kapselung enthalten ist.

7. Verfahren zur Übertragung gemäß dem Anspruch 6 in Verbindung mit dem Anspruch 3, **gekennzeichnet dadurch, dass** es aufweist, falls mindestens zwei Pakete (P_{enc}) zur Kapselung ein Fragment (FTR) des Rahmens aufweisen, ein Zusammenfügen (78) von Fragmenten (FTR) des Rahmens, welche in den Paketen (P_{enc}) zur Kapselung enthalten sind, vor dem Schritt (74, 80) der Übertragung der Daten an das Zielnetzwerk (N3).

8. Verfahren zur Übertragung gemäß irgendeinem der vorhergehenden Ansprüche, **gekennzeichnet dadurch, dass** der Rahmen (TR) ein Ethernet-Rahmen ist.

9. Verfahren zur Übertragung gemäß irgendeinem der vorhergehenden Ansprüche, **gekennzeichnet dadurch, dass** das gesicherte Paket (P_{sec}) ein gemäß einem IPsec-Protokoll gesichertes Paket aufweist.

10. Vorrichtung (5, 11) zum Übertragen von Daten über einen Kanal zur Kommunikation zwischen mindestens einem Startnetzwerk (N1) und einem Zielnetzwerk (N3) über ein Transitnetzwerk (N2) von einem geringeren Sicherheitsniveau als das Start- (N1) und Zielnetzwerk (N3), aufweisend:
- Mittel (22) zur Kapselung, welche in der Lage sind, einen Rahmen (TR) einer Datenverbindungsschicht, der mindestens einen Kopf und eine Nutzinformation aufweist, in mindestens einem Paket (P_{sec}) einer Netzwerkschicht, welche mit dem Transitnetzwerk (N2) kompatibel ist, zu kapseln, und
- Mittel zum Übertragen des oder jedes Pakets (P_{sec}) an das Zielnetzwerk (N3) über das Transitnetzwerk,
wobei die Vorrichtung **dadurch gekennzeichnet ist, dass** das oder jedes Paket (P_{sec}) ein gesichertes Paket ist und dass die Mittel (22) zur Kapselung aufweisen:
- Mittel zum Erzeugen von mindestens einem Kopf (E_{enc}) zur Sicherheitskapselung,
- Mittel zum Bilden mindestens eines Pakets (P_{enc}) zur Kapselung, welches mindestens den Kopf oder einen von den Köpfen (E_{enc}) zur Sicherheitskapselung und den Rahmen (TR) oder ein Fragment (FTR) des Rahmens aufweist,
- Mittel zum Bilden des oder jedes gesicherten Pakets (P_{sec}) durch Anwendung von mindestens einem kryptographischen Schutz auf das oder auf jedes Paket (P_{enc}) zur Kapselung.

## Claims

1. A method for transmitting data over a communication channel between at least one starting network (N1) and at least one receiving network (N3) through a transit network (N2) with a different security level from the starting (N1) and receiving (N3) networks, comprising, during a transmission, from the starting network (N1) to the receiving network (N3) through the transit network (N2), data comprised in at least one frame (TR) of the data link layer, the frame (TR) comprising at least one header and a payload (CU):
- a step (44) for encapsulating the frame (TR) in at least one packet (P_{sec}) of a level 3 network layer of the OSI model, compatible with the transit network (N2), and
- a step (54) for transmitting the or each packet (P_{sec}) to the receiving network (N3) through the transit network (N2),
the method being **characterized in that** the or each packet (P_{sec}) is a secured packet and **in that** the encapsulation step (44) comprises the following steps:
- generating (46) at least one security encapsulation header (E_{enc}),
- forming at least one encapsulation packet (P_{enc}) comprising at least the or one of the security encapsulation header(s) (E_{enc}) and said frame (TR) or a fragment (FTR) of said frame,
- forming the or each secured packet (P_{sec}) by applying (48, 50) at least one cryptographic protection to the or each encapsulation packet (P_{enc}).

2. The transmission method according to claim 1, **characterized in that** the encapsulation step (44) also comprises a step for making the or each secured packet (P_{sec}) anonymous, comprising adjusting the length of the or each secured packet (P_{sec}) to a predefined length.

3. The transmission method according to one of claims 1 or 2, **characterized in that** it also comprises, during the transmission of at least one frame (TR) of a data link layer from the starting network (N1) to the receiving network (N3) through the transit network (N2), before said encapsulation step (44):
- comparing (40) a size (T_{TR}) of the frame (TR) to a predefined maximum size (Tₘₑₓ),
- if the size (T_{TR}) of the frame (TR) is larger than the predefined maximum size (Tₘₐₓ), fragmenting (42) the frame (TR) into at least two frame fragments (FTR), the size of each frame fragment (FTR) being smaller than or equal to the predefined maximum size (Tₘₐₓ).

4. The transmission method according to any one of the preceding claims, **characterized in that** it also comprises the generation (46) of at least one trailer (CF_{enc}), the or each encapsulation packet (P_{enc}) comprising at least one of the security encapsulation header(s) (E_{enc}), the frame (TR) or a fragment (FTR) of the frame and the or one of the trailer(s) (CF_{enc}).

5. The transmission method according to claim 4 combined with claim 2, **characterized in that** the or each trailer (CF_{enc}) comprises traffic padding data (Bo), the length of the traffic padding data (Bo) being chosen so that the length of the or each secured packet (P_{sec}) is equal to said predefined length.

6. The transmission method according to any one of the preceding claims, **characterized in that** the transmission method also comprises, during a transmission of at least one secured packet (P_{sec}) from said transit network (N2) to the receiving network (N3), at least one step for receiving the or each secured packet (P_{sec}), and a step (74,80) for transmitting said data to the receiving network (N3), the or each receiving step comprising:
- cryptographic verification (62, 64, 68) of the encapsulation packet (P_{enc}) comprised in said secured packet (P_{sec}),
- extraction (70) of the frame (TR) or frame fragment (FTR) comprised in said encapsulation packet (P_{enc}),

7. The transmission method according to claim 6 combined with claim 3, **characterized in that** it comprises, if at least two encapsulation packets (P_{enc}) comprise a fragment (FTR) of said frame, an assembly (78) of the fragments (FTR) of the frame comprised in the encapsulation packets (P_{enc}), before the step (74, 80) for transmitting said data to the receiving network (N3).

8. The transmission method according to any one of the preceding claims, **characterized in that** said frame (TR) is an Ethernet frame.

9. The transmission method according to any one of the preceding claims, **characterized in that** said secured packet comprises a secured packet (P_{sec}) according to an IPsec protocol.

10. A device (5, 11) for transmitting data on a communication channel between at least one starting network (N1) and a receiving network (N3) through a transit network (N2) with a different security level from the starting (N1) and receiving (N3) networks, comprising:
- encapsulation means (22), capable of encapsulating a frame (TR) of a data link layer, comprising at least one header and a payload, in at least one packet (P_{sec}) of a network layer compatible with the transit network (N2), and
- means for transmitting the or each packet (P_{sec}) toward the receiving network (N3) through the transit network,
the device being **characterized in that** the or each packet (P_{sec}) is a secured packet and **in that** the encapsulation means (22) comprise:
- means for generating at least one security encapsulation header (E_{enc}),
- means for forming at least one encapsulation packet (P_{enc}) comprising at least the or one of the security encapsulation header(s) (E_{enc}) and said frame (TR) or a fragment (FTR) of said frame,
- means for forming the or each secured packet (P_{sec}) by applying at least one cryptographic protection to the or each encapsulation packet (P_{enc}).
